(19) Europäisches Patentamt
European Patent Office
Office européen des brevets

(11) **EP 3 455 114 B1**

(12) **EUROPÄISCHE PATENTSCHRIFT**

(45) Veröffentlichungstag und Bekanntmachung des Hinweises auf die Patenterteilung:
**26.10.2022  Patentblatt 2022/43**

(21) Anmeldenummer: **17717666.6**

(22) Anmeldetag: **12.04.2017**

(51) Internationale Patentklassifikation (IPC):
**B60W 10/06** (2006.01)      **B60W 10/08** (2006.01)
**B60W 20/16** (2016.01)      **B60K 6/48** (2007.10)
**B60W 20/11** (2016.01)      **B60W 50/00** (2006.01)

(52) Gemeinsame Patentklassifikation (CPC):
**B60W 10/08; B60K 6/48; B60W 10/06; B60W 20/11; B60W 20/16;** B60K 2006/4825; B60W 20/12; B60W 2540/10; B60Y 2400/435; B60Y 2400/442; G06F 30/15; G06F 2111/06; Y02T 10/40; Y02T 10/62

(86) Internationale Anmeldenummer:
**PCT/EP2017/058720**

(87) Internationale Veröffentlichungsnummer:
**WO 2017/194257 (16.11.2017 Gazette 2017/46)**

(54) **STEUERUNGSVERFAHREN FÜR EINEN HYBRIDANTRIEB, STEUERGERÄT UND HYBRIDANTRIEB**

CONTROL METHOD FOR A HYBRID DRIVE, CONTROLLER, AND HYBRID DRIVE

PROCÉDÉ DE COMMANDE D'UN ENTRAÎNEMENT HYBRIDE, APPAREIL DE COMMANDE ET ENTRAÎNEMENT HYBRIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2016  DE 102016208238**

(43) Veröffentlichungstag der Anmeldung:
**20.03.2019  Patentblatt 2019/12**

(73) Patentinhaber: **Volkswagen Aktiengesellschaft 38440 Wolfsburg (DE)**

(72) Erfinder: **SEGTROP, Benjamin 59399 Olfen (DE)**

(56) Entgegenhaltungen:
EP-A1- 2 096 565      EP-A2- 2 857 271
GB-A- 2 483 371      GB-A- 2 520 637
US-A1- 2011 264 353

• Heiko Sequenz: "Emission Modelling and Model-Based Optimisation of the Engine Control", Dissertation , 25. Februar 2013 (2013-02-25), XP055281312, Gefunden im Internet: URL:http://tuprints.ulb.tu-darmstadt.de/3948/1/Emission Modelling and Model-Based Optimisation of the Engine Control - Dissertation Heiko Sequenz.pdf [gefunden am 2016-06-16]

EP 3 455 114 B1

**Beschreibung**

Die vorliegende Erfindung betrifft ein Steuerungsverfahren für einen Hybridantrieb in einem Fahrzeug mit einem Verbrennungsmotor und einem Elektromotor.

Um Hybridantriebe in Fahrzeugen optimal nutzen zu können, ist es erforderlich, geeignete Steuerungsverfahren zu nutzen, um die Drehmomentverteilung bzw. die Leistungsverteilung zwischen einem oder mehreren Elektromotoren und einem Verbrennungsmotor einzustellen. Diese Steuerungsverfahren ergänzen dabei konstruktive Maßnahmen wie die Wahl des Hybridkonzeptes und die Wirkung der einzelnen Komponenten (Verbrennungsmotor, Elektromotor, Getriebe, Kupplungen etc.) auf den Antriebsstrang.

Wichtige Motorfunktionen des Verbrennungsmotors werden ebenfalls mit geeigneten Steuerungsverfahren eingestellt. Steuerungsverfahren ergänzen dabei konstruktive Maßnahmen wie Brennraumgestaltung und beeinflussen die Gemischbildung in Einspritzsystemen und durch Einspritzverfahren. Bei Verbrennungsmotorbetrieb sollen sie den Kraftstoffverbrauch und die damit zusammenhängenden $CO_2$-Emissionen senken sowie wesentliche Abgaskomponenten wie Kohlenmonoxid (CO), Kohlenwasserstoffe (HC), Stickoxide (NOx) sowie Ruß und Partikel.

Diese Einstellung der Funktionen des Verbrennungsmotors ist auch bei einem Hybridantrieb erforderlich, nämlich immer dann, wenn der Verbrennungsmotor teilweise oder vollständig sein Antriebsmoment zur Verfügung stellt.

Dabei werden Informationen über einen Betriebszustand des Motors (zum Beispiel Drehzahl, Drehmoment, gewünschtes Drehmoment, Temperatur, DPF (Diesel-Partikelfilter)beladung) ausgewertet und Führungsgrößen bestimmt, welche den Verbrauch und die Emissionen im Betrieb beeinflussen.

Zur Bestimmung dieser Führungsgrößen dienen oft in einem das Steuerungsverfahren ausführenden Steuergerät zusätzlich hinterlegte Motorkennfelder, in denen bspw. eine Soll-Abgasrückführungsrate oder ein Soll-Ladedruck in Abhängigkeit zum oben genannten Betriebszustand hinterlegt sind.

Geeignete Führungsgrößen sind zum Beispiel Abgasrückführungsrate, Abgasrückführungsaufteilung, Füllung, Einspritzzeitpunkt, Zündzeitpunkt. Von diesen Führungsgrößen werden dann Stellgrößen abgeleitet (zum Beispiel Drosselklappenstellung, Stellung einer VTG (Variable Turbinengeometrie)).

Der Begriff "Verbrennungsmotor" umfasst in diesem Zusammenhang das vollständige Verbrennungsmotorsystem mit all seinen Aggregaten, Hilfsaggregaten und Stellelementen.

Mit dieser Strategie kann sichergestellt werden, dass in festgelegten Geschwindigkeitsprofilen durch eine optimierte Zuordnung bestimmter Führungsgrößen die Emissionsobergrenzen nicht überschritten werden. Ein Beispiel für solche Geschwindigkeitsprofile sind normierte Fahrzyklen, zum Beispiel der NEFZ (neuer Europäischer Fahrzyklus), die zur Bestimmung der Abgas- und/oder Verbrauchswerte gefahren werden. Für solche Zyklen sind beispielsweise globale Optimierungsansätze bekannt, wie sie in Heiko Sequenz: Emission Modelling and Model-Based Optimisation of the Engine Control, D17 Darmstädter Dissertationen 2012 angegeben sind.

Im realen Fahrbetrieb treten nun aber beliebige, unterschiedliche Geschwindigkeitsprofile und Betriebszustände auf, die vor und während der Fahrt nicht bekannt sind. Da die einzelnen Betriebszustände auch unabhängig von der Motorsteuerung schon unterschiedliche Emissionswerte aufweisen, können die Verbrauchs- und Emissionswerte (l/100km bzw. mg/km) bei diesen beliebigen, unterschiedlichen Fahrprofilen teilweise erheblich nach unten oder oben abweichen. Eine globale Optimierung von bspw. Kraftstoffverbrauch oder $CO_2$-Emissionen bei Nichtüberschreiten von Emissionsgrenzen ist durch die oben genannten Steuerungsverfahren somit nicht mehr gegeben.

Insbesondere bei konkurrierenden Emissionsgrößen, wie sie beispielsweise in einem Dieselmotor bei den Ruß(partikel)emissionen und den Stickoxidemissionen auftreten, können Situationen auftreten, bei denen beispielsweise in einem Geschwindigkeitsprofil die zulässigen Stickoxidemissionen überschritten werden und die zulässigen Rußemissionen deutlich unterschritten werden.

Steuerungsverfahren sollen also auch im realen Fahrbetrieb die Führungsgrößen - beispielsweise Abgasrückführungsrate (AGR-Rate), AGR-Aufteilung (Hochdruck/Niederdruck), Füllung, Raildruck etc. - optimiert einstellen aber auch die Nutzung von Abgasnachbehandlungssystemen wie beispielsweise Dieselpartikelfilter und SCR (selektive katalytische Reduktion) im Hinblick auf den Kraftstoff- und AdBlue-Verbrauch sowie die Emissionsgrößen verbessern.

Aus dem Hybridfahrzeugbetrieb sind Ansätze bekannt, bei denen die Drehmoment- bzw. Leistungsaufteilung zwischen Verbrennungsmotor und Elektromotor unter Berücksichtigung zu erwartender Fahrzustände optimiert wird. Lin et al. "A stochastic control strategy for hybrid electric vehicles", Boston 2004, Proceedings of the 2004 American Control Conference legt beispielsweise ein stochastisches, dynamisches Programmierungsverfahren vor, bei dem eine Antriebsmanagementstrategie für eine Gruppe zufälliger Fahrzyklen optimiert und in Echtzeit implementiert wird. So eine dynamische Programmierung ist zwar global optimal, erfordert aber unter Umständen einen sehr hohen Rechenaufwand, so dass solche Steuerungsverfahren in typischen Fahrzeugsteuergeräten mit beschränkter Rechenkapazität unter Umständen nur eingeschränkt anwendbar sind.

Aus Olivier Grondin et al. "Energy management strategy for Diesel hybrid electric vehicle", Chicago 2011, IEEE Vehicle Power and Propulsion Conference ist eine Energiemanagementstrategie bekannt, mit der die Leistungsverteilung zwischen den Energiequellen Treibstoff (Verbrennungsmotor) und Batterie (Elektromotor) berechnet wird. Die dort vor-

2

geschlagene Strategie basiert auf einer ECMS (Energy Consumption Minimizations Strategy), bei der neben dem reinen Treibstoffverbrauch, der mit dem $CO_2$-Ausstoß korreliert, auch der zugehörige NOx-Ausstoß sowie der Ladezustand des Systems betrachtet wird. Mit diesem Ansatz werden die Gesamtkosten des Energieverbrauchs - normiert auf die Treibstoffkosten - bestimmt und können für bestimmte Fahrzustände minimiert werden. Die Berücksichtigung des NOx-Ausstoßes oder in anderen Worten die Umrechnung des NOx-Ausstoßes in Kraftstoffverbrauch bzw. $CO_2$-Ausstoß, erfolgt über einen festen wählbaren Faktor. So ein fester Faktor kann für feststehende Laborfahrzyklen optimiert werden, er ist jedoch für den realen Fahrbetrieb nur zufällig zutreffend. Auch werden bei dem dort angegebenen Verfahren keine anderen Emissionsgrößen wie z. B. Rußausstoß berücksichtigt.

EP 2 857 271 A2 beschreibt ein Verfahren zur Auswahl optimaler Betriebsmodi eines Hybridantriebs umfassend einen Verbrennungsmotor und einen Elektromotor. Die Bestimmung der optimalen Betriebsmodi wird durch die Vorgabe einer gewünschten Zielgröße angepasst. Dabei kann diese Zielgröße multidimensional sein und $CO_2$-Emissionen umfassen.

GB 2 520 637 A beschreibt ein Steuergerät für einen Verbrennungsmotor mit mindestens einem dynamischen Echtzeit-Rechenmodell. Das Rechenmodell kann Motorperformance, Emissionserzeugung und Kraftstoffeffizienz voraussagen.

Weiterer Stand der Technik ist aus GB 2 483 371 A und EP 2 096 565 A1 bekannt.

Ein möglicher Verbesserungsansatz könnte darin bestehen, unter Berücksichtigung einer Betriebszustandsinformation, Emissionsobergrenzen und einer kumulierten Ist-Emissionsgröße eine Führungsgröße für den Verbrennungsmotor zu bestimmen (zum Beispiel AGR-Rate, AGR-Aufteilung, Füllung).

Die Betriebszustandsinformationen könnten dabei zum Beispiel die Drehzahl, das aktuelle Drehmoment, das gewünschte Drehmoment, Temperaturen, die DPF-Beladung und andere Größen umfassen.

Die kumulierte Ist-Emissionsgröße umfasst die Summe aller in einem bestimmten Betriebszeitraum vom Verbrennungsmotor ausgestoßenen Emissionen.

Über die Führungsgröße(n) könnte dann wenigstens ein Betriebszustand des Verbrennungsmotors so eingestellt werden, dass mehrere Ist-Emissionsgrößen so beeinflusst würden, dass die kumulierten Ist-Emissionsgrößen in einem bestimmten Betriebszeitraum mit einer Zusammenstellung aus beliebigen, in zufälliger Reihenfolge eingestellten, unterschiedlichen Betriebszuständen des Verbrennungsmotors Emissionsobergrenzen für diesen Betriebszeitraum nicht überschritten (mg/km) und eine Zielfunktion so weit wie möglich reduziert würde.

Hier wird eine zu minimierende bzw. zu optimierende Größe als Zielfunktion bezeichnet (z.B. Kraftstoffverbrauch bzw. die davon abhängigen $CO_2$-Emissionen, Regenerationsintervalle diverser Abgasnachbehandlungssysteme wie Rußpartikelfilter, AdBlue-Verbrauch, NOx Emissionen etc. oder eine Kombination solcher Größen).

Der Begriff "beliebige" Betriebszustände soll alle technisch sinnvollen Betriebszustände umfassen, die im sachgerechten Normalbetrieb eines Verbrennungsmotors auftreten können. So ein Steuerungskonzept hätte den Vorteil, dass beispielsweise eine unkritische Ist-Emissionsgröße durch eine Veränderung der Führungsgröße so weit erhöht würde, dass eine kritische Ist-Emissionsgröße entsprechend verringert würde und sichergestellt wäre, dass das Emissionsgrenzniveau (Emissionsgrenzwert) einer Emissionsgröße für die kritische Emissionsgröße in einem bestimmten Betriebszeitraum nicht überschritten würde.

Dabei könnten eine oder mehrere Führungsgröße(n) durch eine Indifferenzkurve aus Pareto-optimalen Alternativen - von bspw. Einspritzmenge, Ist-Emissionen und/oder AdBlue-Dosierung - ausgewählt werden. Dazu wäre auch eine verlässliche Heuristik erforderlich, die die Abstände der kumulierten Ist-Emissionen zu ihrem Grenzniveau berücksichtigt.

Weiter wäre so ein Ansatz auch auf die Betrachtung bereits zurückliegender Betriebszustände reduziert.

Es besteht also die Aufgabe, ein Steuerungsverfahren für einen Hybridantrieb in einem Fahrzeug bereitzustellen, bei dem auf einfache und effiziente Weise mit einer eindeutigen Methode eine aktuelle Führungsgröße des Verbrennungsmotors bestimmt wird, bei der zufällige und zunächst unbekannte, reale Fahrzustände berücksichtigt werden können.

Diese Aufgabe wird durch das erfindungsgemäße Steuerungsverfahren nach Anspruch 1, einem Steuergerät nach Anspruch 13 und einem Hybridantrieb nach Anspruch 14 sowie einem Fahrzeug nach Anspruch 15 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Die Erfindung zeichnet sich dadurch aus, dass die Drehmoment-/Leistungsaufteilung zwischen dem Verbrennungsmotor und dem Elektromotor bestimmt wird, indem in einer Kostenfunktion eine Betriebszustandsinformation des Hybridantriebes, eine Ladezustandsinformation einer Traktionsbatterie und eine Differenz zwischen einer Emissionsobergrenze und einer kumulierten Ist-Emissionsgröße berücksichtigt werden. Dabei wird ein Betriebszustand des Verbrennungsmotors und damit das verbrennungsmotorische Antriebsmoment mittels einer Führungsgröße so beeinflusst, dass wenigstens zwei Ist-Emissionsgrößen so eingestellt werden, dass die entsprechenden (zu den Ist-Emissionsgrößen korrespondierenden) kumulierten Ist-Emissionsgröße in einem Betriebszeitraum mit einer Zusammenstellung aus beliebigen, in zufälliger Reihenfolge eingestellten, unterschiedlichen Betriebszuständen des Hybridantriebes, und damit des Verbrennungsmotors, die Emissionsobergrenzen für diesen Betriebszeitraum nicht überschreiten, wobei die Kostenfunktion minimiert wird, indem die Führungsgröße mittels aus einer Differenzfunktion bestimmten Indifferenzkurve aus Pareto-optimalen Alternativen (z.B. in sogenannten Paretofronten dargestellt) ausgewählt wird und so der verbrennungsmotorische Drehmomentanteil emissionsoptimiert einstellbar ist.

Das Verfahren bestimmt also die gewünschten Führungsgrößen des Verbrennungsmotors wie zum Beispiel Abgasrückführungsrate (AGR-Rate), Ladedruck/Füllung, AdBlue-Dosierung und damit auch die Drehmoment- bzw. Leistungsaufteilung zwischen Elektromaschine - motorisch (Drehmomentabgabe) und/oder generatorisch (Drehmomentaufnahme) betreibbar - und Verbrennungsmotor in Abhängigkeit von aktuellen "Emissionskosten" oder "Gesamtkosten", in die elektrische Leistung und wenigstens zwei Emissionsgrößen einfließen, die in der Kostenfunktion auf eine Emissionsgröße normiert sind (z.B. den $CO_2$-Ausstoß als Einheit für die "Kosten").

Das Verfahren beruht also auf einer methodisch, rechnerisch einfach zu bewältigenden Kostenbetrachtung, bei der sowohl kumulierte Ist-Emissionsgrößen als auch Ladezustandsinformationen (z.B. über den aktuellen Ladezustand und einen Referenz- oder Zielladezustand) in die Kostenfunktion einfließen. Die Differenzfunktion erlaubt dabei die eindeutige Bestimmung einer Indifferenzkurve mittels der eine Pareto-optimale Alternative der Führungsgröße ausgewählt werden kann. Es steht also eine eindeutige Methode zur Bestimmung der Führungsgröße zur Verfügung.

Es gibt Ausführungen, bei denen die Differenzfunktion zur Bestimmung eines ersten Äquivalenzfaktors dient, welcher eine zweite Ist-Emissionsgröße (der beiden Ist-Emissionsgrößen) in ein Emissionsäquivalent einer ersten Ist-Emissionsgröße (der beiden Ist-Emissionsgrößen) umrechnet. Durch die Abhängigkeit des ersten Äquivalenzfaktors von der Differenzfunktion wird dieser dynamisch anpassbar. Gleichzeitig wird die zweite Ist-Emissionsgröße auf die erste Ist-Emissionsgröße normiert. So ist es z. B. möglich, den NOx-Ausstoß über den ersten Äquivalenzfaktor in der zu minimierenden Kostenfunktion normiert auf den $CO_2$-Ausstoß bzw. den Kraftstoffverbrauch normiert zu betrachten.

In gleicher Weise gilt dies für einen zweiten Äquivalenzfaktor, in dem die Ladezustandsinformation einfließt. Auf diese Weise kann die Antriebsleistung des Elektromotors ebenfalls in ein Emissionsäquivalent der ersten Ist-Emissionsgröße (also beispielsweise den $CO_2$-Ausstoß bzw. den Kraftstoffverbrauch) umgerechnet werden und je nach Ladezustand bzw. je nach gewünschtem Ladezustand (Referenz- oder Zielladezustand) in der Kostenfunktion berücksichtigt werden.

Bei einer Ausführung, bei welcher die Indifferenzkurve eine Gerade ist, deren Steigung mit dem ersten Äquivalenzfaktor korreliert, der mittels der Differenzkurve bestimmbar ist, kann die Pareto-optimale Alternative der Führungsgröße besonders einfach aus dem Pareto-optimalen Alternativen ausgewählt werden (z. B. durch Anlegen dieser Geraden an die entsprechende Paretofront).

Bei einem Verfahren, bei dem in der Differenzfunktion eine Prädiktionsinformation berücksichtigt wird, fließen in die Kostenfunktion bzw. in die Differenzfunktion neben den vergangenen und aktuellen Emissionen auch prädizierte Emissionen für erwartete Betriebszustände ein.

Dabei werden prädizierte Emissionen für erwartete Betriebszustände ermittelt, abgeschätzt oder auch aus hinterlegten Daten abgeleitet. Dazu können beispielsweise Streckenvorausschauinformationen für eine geplante Fahrroute dienen, die beispielsweise Informationen zum Höhenprofil, zur Geschwindigkeitsbegrenzungen, zu Verkehrs- und Ampelinformationen, sowie Informationen zu Umgebungstemperaturen oder Luftdruckbedingungen dienen.

Dabei gibt es Ausführungen, bei denen die Prädiktionsinformationen Informationen zu einer Fahrstrecke (z.B. die Länge der Fahrstrecke) umfassen, die dann mit einem fahrstreckenbezogenen Emissionsgrenzwert multipliziert werden.

Es gibt auch Ausführungen, bei denen die Betriebszustandsprognoseinformation wenigstens eine Information aus der folgenden Gruppe umfasst: Fahrstreckenqualität, Fahrstreckenlänge und Umweltbedingungen. Über die Fahrstreckenqualität (bspw. Steigungen), die Fahrstreckenlänge und Umweltbedingungen (z.B. die Höhe über Meeresspiegel) lassen sich wesentliche Betriebszustandsinformationen (Drehmoment, Drehzahl) und der Leistungsbedarf einer Verbrennungskraftmaschine bestimmen.

Es gibt eine Ausführung, bei welcher die Prädiktionsinformation weiterhin alternativ oder zusätzlich eine Emissions-Prognosegröße umfasst. Damit ist es möglich, bei der Differenzbetrachtung sowohl den zulässigen Emissionsgrenzwert - einschließlich einer prädizierten Komponente - als auch die tatsächliche und erwartete Emission zu betrachten. So ist es möglich, die kritische Differenz zwischen diesem Grenzwert und den erwarteten Emissionen vergangenheits- und zukunftsorientiert zu analysieren und zur Bestimmung der Indifferenzkurve heranzuziehen.

Dabei gibt es Ausführungen, bei denen die Betriebszustandsinformation wenigstens eine Drehzahl (n) und ein Soll-Drehmoment (M) umfasst.

Bei einer Ausführung umfassen die Ist-Emissionsgrößen (Zielfunktionen) wenigstens zwei der folgenden Größen. Zu den Größen gehören NOx-Ausstoß, HC-Ausstoß, CO-Ausstoß, $CO_2$-Ausstoß, kombinierter HC- und NOx-Ausstoß, Rußpartikelanzahl, Rußpartikelmasse, Beladungszustand eines Dieselpartikelfilters und/oder eines NOx-Speicherkatalysators, AdBlue-Verbrauch. Damit lässt sich das Verfahren an unterschiedliche Emissionsschwerpunkte anpassen.

In einer anderen Ausführung umfasst die Führungsgröße wenigstens eine der folgenden Größen, die sich auf das Emissionsverhalten auswirken, nämlich AGR-Rate, AGR-Aufteilung, Füllung, Ladedruck, Zündzeitpunkt, Raildruck. Die daraus abgeleiteten Stellgrößen umfassen dabei eine der folgenden Größen, über die bei modernen Motoren die gewünschte Führungsgröße bewirkt werden kann, nämlich Drosselklappenstellung; Einstellung der variablen Turbinengeometrie, Einspritzzeitpunkt, Nockenwellenverstellung.

In einer anderen Ausführung werden zwei Ist-Emissionsgrößen betrachtet, nämlich der Stickoxidausstoß und der Rußausstoß, die bei Dieselmotoren konkurrierend zusammenhängen.

Es gibt auch Ausführungen, bei denen der $CO_2$-Ausstoß und der NOx-Ausstoß konkurrierend optimiert werden.

Es gibt auch Ausführungen, bei denen der $CO_2$-Ausstoß, der NOx-Ausstoß und der Rußausstoß, also drei Ist-Emissionsgrößen, konkurrierend optimiert werden.

Mit Hilfe eines Hybridantriebs mit einem erfindungsgemäßen Steuergerät lassen sich für ein Fahrzeug mit einem solchen Antrieb verbesserte Verbrauchswerte und Emissionswerte realisieren.

Ausführungsbeispiele der Erfindung werden nun beispielhaft und unter Bezugnahme auf die beigefügte Zeichnung beschrieben. Darin zeigt:

Fig. 1 schematisch ein Motorsystem mit einem erfindungsgemäßen Steuergerät;

Fig. 2 ein schematisches Fahrzeuglayout mit einem erfindungsgemäßen Steuergerät;

Fig. 3 eine schematische Darstellung eines erfindungsgemäßen Steuerverfahrens mit wesentlichen Input- und Output-Größen;

Fig. 4 ein Diagramm, in dem Ruß- und NOx-Emissionen in Abhängigkeit der AGR-Rate dargestellt sind;

Fig. 5 Pareto-optimale Arbeitspunkte, für die eine bestimmte Rußemission und eine bestimmte NOx-Emission gilt;

Fig. 6 Auswahl einer Führungsgröße durch eine Indifferenzkurve basierend auf dem Zusammenhang von Rußemissionen und NOx-Emissionen bei einer bestimmten (erhöhten) kumulierten NOx-Emission;

Fig. 7 die in Fig. 6 dargestellte Auswahl für eine niedrigere kumulierte NOx-Emission;

Fig. 8 die in Fig. 6 dargestellte Auswahl für eine überhöhte kumulierte NOx-Emission;

Fig. 9 die in Fig. 6 dargestellte Auswahl basierend auf dem Zusammenhang von $CO_2$- und NOx-Emissionen;

Fig. 10 die in Fig. 6 dargestellte Auswahl durch eine nichtlineare Indifferenzkurve;

Fig. 11 eine Darstellung verschiedener Emissionsgrößen über einen zeitlichen Verlauf;

Fig. 12 den Verlauf einer Kennlinie zur Bestimmung einer Indifferenzkurve;

Fig. 12A-C unterschiedliche Indifferenzkurven, die nach dem er erfindungsgemäßen Verfahren bestimmt sind und

Fig. 13-16 unterschiedliche Szenarien, in denen die emissionsoptimierte Drehmomentaufteilung nach dem erfindungsgemäßen Verfahren bestimmt wird.

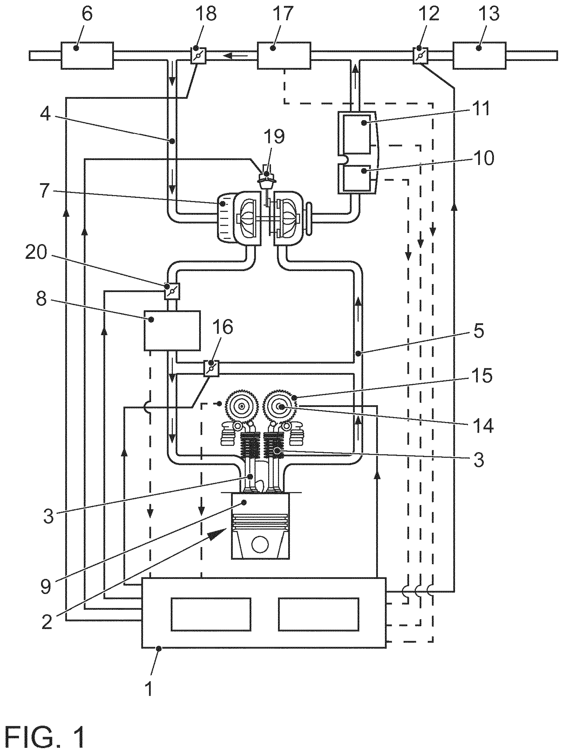

In Fig. 1 ist ein Motorschema dargestellt, welches über ein erfindungsgemäßes Steuergerät 1 geregelt bzw. gesteuert wird. Dargestellt ist ein als Hubkolbenmotor 2 (Diesel- oder Otto-Motor), ausgebildeter Verbrennungsmotor, der über Ventile 3 und über einen Ladeluftstrang 4 befüllt wird und über einen Abgasstrang 5 entleert wird. Die Zuluft gelangt durch einen Luftfilter 6 und einen Abgasturbolader 7 mit verstellbarer Turbinengeometrie durch einen Zwischenkühler 8 über ein Einlassventil 3 in den Zylinder 9, wo gegebenenfalls über ein Einspritzsystem Kraftstoff zugeführt wird. Nach der Verdichtung und Verbrennung des Luft-Kraftstoffgemischs wird das entstandene Abgas durch ein Auslassventil 3 über den Abgasstrang abgeführt.

Das verdichtete Abgas passiert dabei den Abgasturbolader 7, treibt diesen an und verdichtet so die Ladeluft. Anschließend passiert es einen Stickstoffspeicherkatalysator 10 sowie einen Dieselpartikelfilter 11 und gelangt schließlich durch eine Abgasklappe 12 in den Auspuff 13.

Die Ventile 3 werden über eine verstellbare Nockenwelle 14 angetrieben. Die Verstellung erfolgt über eine Nockenwellenverstelleinrichtung 15, die vom Steuergerät 1 ansteuerbar ist.

Ein Teil des Abgases kann über ein Hochdruck-Abgasrückführventil 16 in den Ladeluftstrang 4 eingeleitet werden. Ein abgasbehandelter Teilstrom kann im Niederdruckbereich nach dem Abgasturbolader 7 über eine entsprechende Abgaskühlung 17 und ein Abgasrückführungs-Niederdruckventil 18 in den Ladeluftstrang 4 geführt werden. Die Turbinengeometrie des Abgasturboladers 7 ist über eine Stelleinrichtung 19 einstellbar. Die Ladeluftzufuhr ("Gas") wird über die Hauptdrosselklappe 20 geregelt.

Über das Steuergerät 1 sind u.A. das Abgasrückführungs-Niederdruckventil 18, die Stelleinrichtung 19, die Hauptdrosselklappe 20, das Abgasrückführungs-Hochdruckventil 16, die Nockenwellenverstelleinrichtung 15 sowie die Abgasklappe 12 ansteuerbar (durchgezogene Linien).

Weiterhin wird das Steuergerät 1 über Sensoren und Sollwertgeber beispielsweise mit Temperaturinformationen (Zwischenkühler 8, Abgaskühlung 17) und mit Ist-Emissionswerten (z.B. aus einem Sensor oder physikalischen/empirischen Modell) versorgt.

Dazu können noch weitere Betriebszustandsinformationen kommen wie: Fahrpedalstellung, Drosselklappenstellung, Luftmasse, Batteriespannung, Motortemperatur, Kurbelwellendrehzahl und oberer Totpunkt, Getriebestufe, Fahrzeuggeschwindigkeit.

Es besteht also ein komplexes Steuer- und Regelsystem, welches den Motorbetrieb in unterschiedlichsten Betriebszuständen hinsichtlich unterschiedlicher Zielgrößen einstellen, regeln und möglichst optimieren soll.

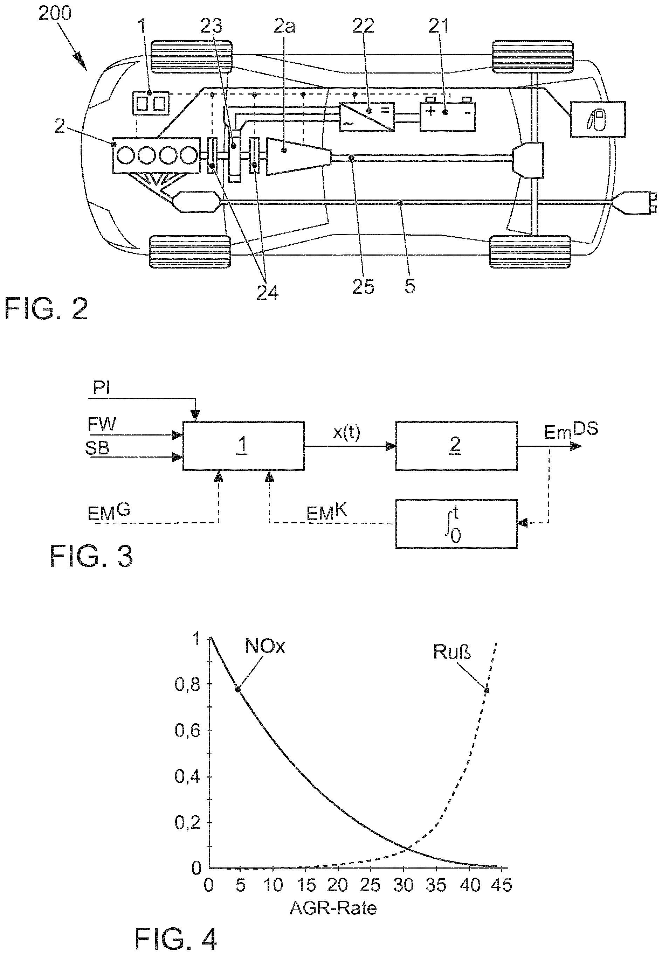

Figur 2 zeigt ein schematisch dargestelltes Fahrzeug 200 mit einem Hybridantrieb (Parallelhybridarchitektur), in dem ein als Verbrennungsmotor dienender Hubkolbenmotor 2 mit dem Abgasstrang 5 angeordnet ist und der über eine Kupplung 24 mit einem Antriebsstrang 25 verbunden ist.

Zusätzlich umfasst der Hybridantrieb einen elektrischen Antrieb der hier als Elektromotor 23 ausgebildet ist, der über die Kupplung 24 mit dem Hubkolbenmotor 2 bzw. dem Getriebe 2a und dem Antriebsstrang 25 gekoppelt ist. Der Elektromotor 23 ist bspw. als permanentmagneterregte Synchronmaschine ausgebildet, die über einen elektrischen Energiespeicher (Traktionsbatterie) 21 (und einen Umrichter 22) mit Energie versorgt wird. Das Steuergerät 1 ist über entsprechende Signalleitungen ebenfalls mit den elektrischen Antriebseinheiten (21, 22, 23) gekoppelt. Dabei kann das Steuergerät 1 steuernd/regelnd in den Betrieb des Verbrennungsmotors 2, des Elektromotors 23, des Getriebes 2a (das als Drehzahl und Drehmomentwandler und/oder -koppler dient), der Traktionsbatterie 21 und der Kupplung eingreifen. Der Elektromotor 23 (auch Elektromaschine) kann sowohl motorisch als generatorisch betrieben werden.

Zur unter Emissionsgesichtspunkten optimierten Leistungs-/Drehmomentverteilung zwischen Verbrennungsmotor 2 und Elektromotor 23 dient die folgende zu minimierende Kostenfunktion gemäß Formel (1):

$$(1) \qquad \min_{M_{VKM}} J\left(M_{VKM}, \bar{n}_K\right)$$

$$= \min_{M_{VKM}} \dot{m}_{CO2}(M_{VKM}, \bar{n}_K) + \alpha_{el}(SOC, SOCref) \cdot P_{el}\left(M_{EM}(M_{VKM}, \bar{n}_K)\right) + \beta_{NOx}(\delta) \cdot \dot{m}_{NOx}(M_{VKM}, \bar{n}_K)$$

In dieser Kostenfunktion gemäß Formel 1 sind die zu berücksichtigenden Größen auf den $CO_2$-Ausstoß $\dot{m}_{CO2}$ normiert, der vom Antriebsmoment $M_{VKM}$ des Verbrennungsmotors 2 und der eingestellten Drehzahl $\bar{n}_K$ abhängt. $\dot{m}_{CO2}$ stellt dabei eine erste Emissionsgröße $EM_1$ dar.

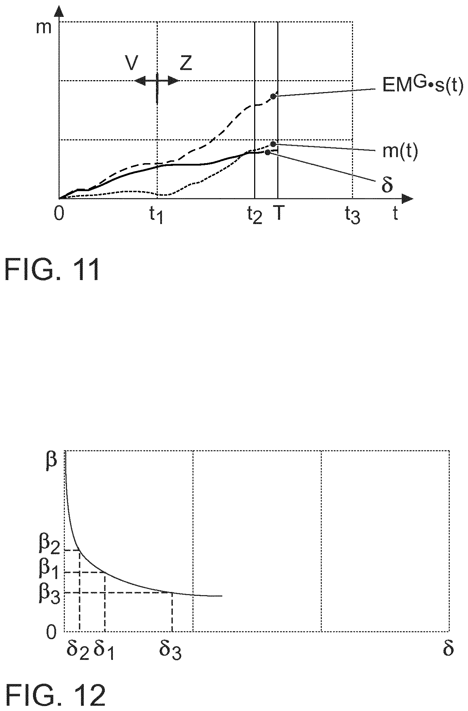

Die zweite hier berücksichtigte Emissionsgröße ist der NOx-Ausstoß $\dot{m}_{NOx}$, der die zweite Emissionsgröße $EM_2$ darstellt und ebenfalls vom Antriebsmoment $M_{VKM}$ und der eingestellten Drehzahl $\bar{n}_K$ des Verbrennungsmotors 2 abhängt. Zur Normierung der zweiten Ist-Emissionsgröße $EM_2$ dient der erste Äquivalenzfaktor $\beta_{NOx}(\delta)$ der den NOx-Ausstoß in ein entsprechendes $CO_2$-Äquivalent umrechnet. Die Bestimmung dieses ersten Äquivalenzfaktors $\beta$ von $\delta$ wird weiter unten im Zusammenhang mit den Fig. 11 bis 12C dargestellt.

Weiter wird in der Kostenfunktion die elektrische Leistung $P_{EL}$ berücksichtigt die vom Drehmoment $M_{EM}$ des Elektromotors 23 abhängt, das wiederum vom zur Verfügung stehenden Drehmoment $M_{VKM}$ des Verbrennungsmotors 2 und der eingestellten Drehzahl $\bar{n}_K$ abhängt. $M_{VKM}$ und $M_{EM}$ ergeben zusammen das Gesamtmoment $M_K$

Die elektrische Leistung $P_{EL}$ wird wiederum über den zweiten Äquivalenzfaktor $\alpha_{EL}$ in ein entsprechendes $CO_2$-Äquivalent umgerechnet. $\alpha_{EL}$ hängt dabei von Ladezustandsinformationen ab, die zum einen den aktuellen Ladezustand SOC (State of Charge) der Traktionsbatterie 21 und einen Referenzladezustand SOCref umfassen. $\alpha_{EL}$ ergibt sich hier aus dem Unterschied zwischen dem Ladezustand SOC und dem Referenzladezustand SOCref und beeinflusst so den Anteil, mit dem die elektrische Leistung $P_{EL}$ in die Kostenfunktion $J(M_{VKM}, \bar{n}_K)$ eingeht.

Die variable Bestimmung des ersten Äquivalenzfaktors $\beta(\delta)$ erlaubt eine differenzierte Berücksichtigung von bisher erfolgten Emissionen aber auch von zukünftigen Emissionen, die auf der Grundlage von Prädiktionsinformationen abgeschätzt werden können (siehe dazu weiter unten). Diese Variation ist durch die Berücksichtigung der Differenz zwischen kumulierten Ist-Emissionsgrößen $EM^K$ und Emissionsobergrenzen $EM^G$ über eine Differenzfunktion $\delta(t)$ ermittelbar. Dabei können auch, wie weiter unten genauer gezeigt, sowohl bereits absolvierte Betriebszustände als auch zukünftige Betriebszustände berücksichtigt werden.

Es ist auch möglich, dass die Kostenfunktion um weitere Ist-Emissionsgrößen $EM^K$ erweitert werden (z. B. Rußpartikelemissionen als $\dot{m}_{Ruß}$), die dann ebenfalls über einen geeigneten festen oder variablen Äquivalenzfaktor in ein Emissionsäquivalent der ersten Emissionsgröße $EM_1$ umgerechnet wird - im vorliegenden Fall also in ein $CO_2$-Äquivalent. Dieser Grundsätzliche Ansatz ist nicht auf die dargestellte Parallelhybridarchitektur beschränkt, sondern gilt grundsätzlich für alle Hybridantriebskonzepte , bei denen der verbrennungsmotorische Antrieb durch einen elektromotorischen Antrieb unterstützt bzw. ersetzt werden kann.

Die nachfolgenden Ausführungen beziehen sich zunächst grundsätzlich auf die Pareto-optimierte Steuerung und Regelung von Emissionswerten in Abhängigkeit von vorgegebenen Emissionsobergrenzen und kumulierten Ist-Werten.

Ein Grundsystem für die Durchführung eines solchen Verfahrens ist in Fig. 3 dargestellt. Dabei bestimmt das Steuergerät 1 eine oder mehrere zur Beeinflussung der Emissionen erforderliche und wirksame Führungsgrößen x(t).

Als Eingangsgrößen dienen der Fahrerwunsch FW, der bspw. über die Stellung eines Gaspedals und/oder eines Bremspedals abgeleitet wird, sowie weitere Betriebsbedingungen SB des Fahrzeugs 200 bzw. des Motors 2. Weiterhin werden die Emissionsgrenzwerte $EM^G$ berücksichtigt, die während des Betriebs nicht überschritten werden dürfen und schließlich dient eine Prädiktionsinformation PI dazu, zukünftige Betriebszustände zu berücksichtigen. Typische Prädiktionsinformationen PI sind z.B. eine Emissionsprognose $EM^P$ oder Betriebszustandsprognoseinformationen, die bspw. bei einem Fahrzeug Informationen über die Fahrstreckenlänge s(t), die Fahrstreckenqualität und erwartete Umweltbedingungen während des Betriebes umfassen.

Daraus werden Führungsgrößen x(t) (z.B. AGR-Rate, AGR-Aufteilung, Füllung, Zündzeitpunkt) abgeleitet und Stellgrößen bestimmt, die im Verbrennungsmotor 2 bzw. dessen Komponenten (zum Beispiel Stellung der Hauptdrosselklappe 20, Nockenwelleneinstellung, Einstellung der Turbinengeometrie des Abgasturboladers 7, Einstellung der Abgasklappe 12, etc.) die Emissionen (zum Beispiel NOx, HC, CO, Ruß) des Verbrennungsmotors beeinflussen. Diese werden als Massenströme (Emissionsraten) $EM^{DS}$ erfasst (zum Beispiel Masse pro Zeit [mg/s]). Aus diesen Emissionen werden kumulierte Ist-Werte $EM^K$ der Emissionen abgeleitet (Integration der Emissionsraten über die Zeit).

Aus diesen kumulierten Ist-Werten $EM^K$ werden im Steuergerät 1 zusammen mit der verstrichenen Betriebszeit t bzw. der zurückgelegten Strecke s, bekannten bzw. vorgegebenen Emissionsobergrenzen $EM^G$ und Informationen über den Fahrerwunsch FW (z.B. Beschleunigung: $a^{Soll}$; Drehmoment: $M^{Soll}$) und sonstige Betriebsbedingungen SB (z.B. Geschwindigkeit: v; Drehzahl: n) des Verbrennungsmotors 2 die Führungsgröße(n) x(t) bestimmt.

Fig.4 zeigt beispielhaft den Zusammenhang zwischen NOx-Emissionen und Rußemissionen in Abhängigkeit von der Abgasrückführrate (AGR), die hier eine Führungsgröße x(t) bildet. Das Diagramm zeigt, dass durch Erhöhung der AGR die NOx-Emissionen zwar gesenkt werden können, dabei aber die Rußemissionen ansteigen.

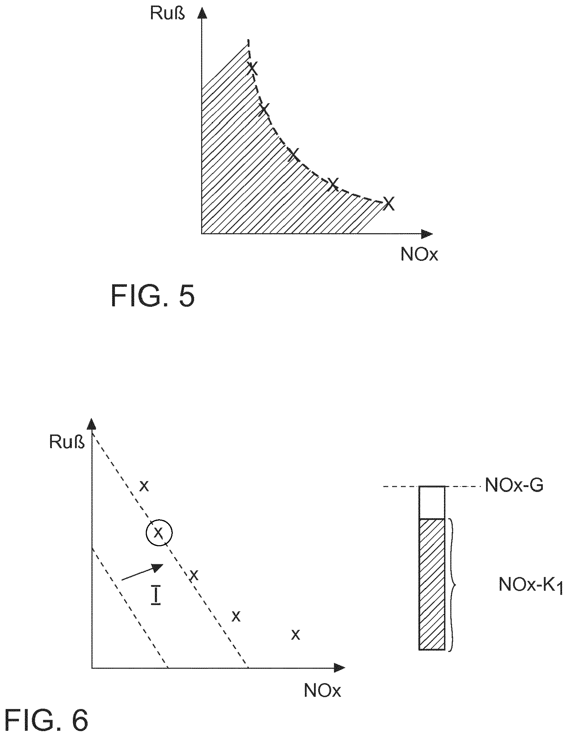

Fig. 5 zeigt ein Diagramm mit Zielgrößenkombinationen von bestimmten Rußemissionen, die über bestimmte NOx-Emissionen aufgetragen sind. Besteht nun z.B. die Aufgabe, in einem (beliebigen) Betriebszustand die Rußemissionen zu minimieren/zu senken, dabei aber einen (kumulierten) NOx-Grenzwert einzuhalten, muss die Emissionshistorie (kumulierte Ist-Werte $Em^G$) für zurückliegende (ggf. beliebige, in zufälliger Reihenfolge eingestellte, unterschiedliche Betriebszustände) berücksichtigt werden.

Pareto-optimale Zielgrößenkombinationen, bei denen der Ruß-Ausstoß nur weiter gesenkt werden kann, wenn die NOx-Emission erhöht wird, sind durch die Punkte x gekennzeichnet. Alle Pareto-optimalen Zielgrößenkombinationen bilden die sogenannte Paretofront, welche die Punkte x miteinander verbindet. Bei einem Minimierungsproblem sind Punkte links unterhalb der Paretofront (schraffierter Bereich) nicht realisierbar und alle rechts oberhalb vorgesehenen Zielgrößenkombinationen nicht Pareto-optimal, da es jeweils Kombinationen (Punkte x) gibt, die sowohl hinsichtlich Ruß- Emission als auch der NOx-Emission günstiger auf der Paretofront realisiert werden können.

Die Auswahl aus Pareto-optimalen Zielgrößenkombinationen von zwei Zielgrößen (NOx-Emissionen und Rußemissionen) zeigt die Darstellung in Fig. 6. In der rechten Säule ist als Emissionsobergrenze $EM^G$ ein NOx-Grenzwert NOx-G (gestrichelte Linie) angegeben und die darunter dargestellte Säule zeigt im schraffierten Bereich als kumulierten Ist-Wert $Em^K$ die bisherigen kumulierten NOx-Emissionen NOx-$K_1$. Da die kumulierten NOx-Emissionen NOx-$K_1$ bereits relativ nah am NOx-Grenzwert NOx-G sind, ist hier ein relativ hohes Austauschverhältnis zwischen den Zielgrößen Rußemissionen und NOx-Emissionen gewählt (erhöhte Rußemissionen, zugunsten von geringen NOx), um den NOx-Grenzwert NOx-G nicht zu überschreiten. Diese hier gewünschte Austauschrate wird durch die Indifferenzkurve I angegeben, die hier relativ steil abfallend dargestellt ist, und dann an die nächstliegende Zielgrößenkombination verschoben wird, in dem für diesen Betriebspunkt eine bestimmte Rußemission und eine bestimmte NOx-Emission realisierbar ist. Dieser Zielgrößenkombination wird dann mit Hilfe der im Diagramm aus Fig. 4 bekannten Informationen eine AGR als geeignete Pareto-optimierte Führungsgröße x(t) zugeordnet.

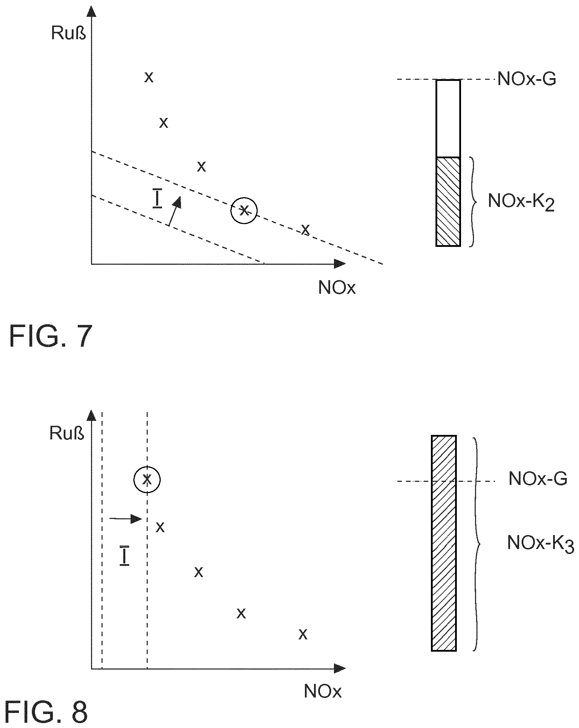

Fig. 7 zeigt ein Beispiel, bei dem die kumulierten NOx-Emissionen (NOx-$K_2$) weiter unter dem NOx-Grenzwert NOx-G liegen. Hier ist das Austauschverhältnis der Indifferenzkurve I kleiner (die Gerade fällt flacher ab). Hier kann also eine höhere NOx-Emission in Kauf genommen werden, ohne dass Gefahr bestünde, dass der NOx-Grenzwert NOx-G überschritten wird. Damit kann die Rußemission geringer gehalten werden. Die flacher verlaufende Gerade wird an die nächste Zielgrößenkombination verschoben, an dem eine bestimmte NOx-Emission und eine entsprechende Rußemission mit einer zugehörigen Führungsgröße x(t) (hier die entsprechende AGR aus Fig.3) realisierbar ist.

Fig. 8 zeigt ein Beispiel, bei dem die kumulierten NOx-Emissionen (NOx-$K_3$) den NOx-Grenzwert NOx-G überschritten haben. Hier ist das Austauschverhältnis der Geraden I (senkrechte Indifferenzkurve) quasi unendlich. Ungeachtet der Höhe der Rußemissionen wird die Führungsgröße x(t) für minimale NOx-Emission ausgewählt.

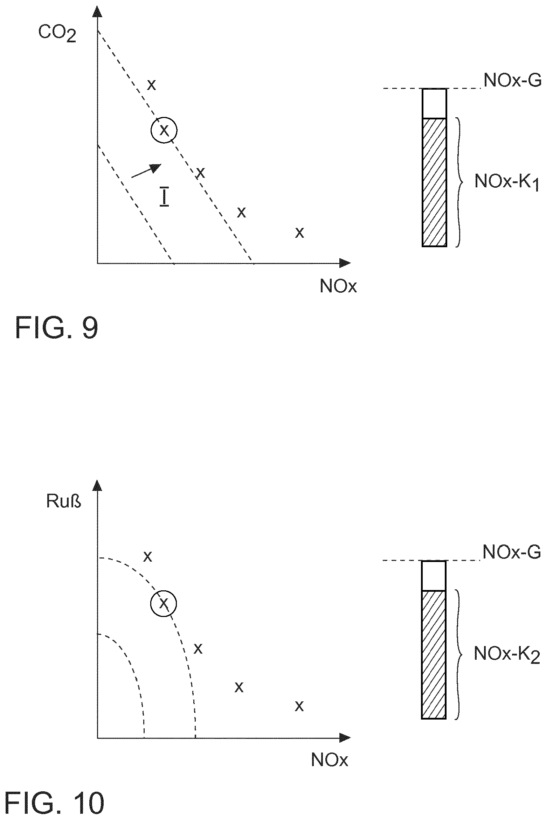

Fig. 9 zeigt analog zu Fig. 5 ein Beispiel, bei dem in Abhängigkeit der kumulierten NOx-Emissionen $CO_2$ minimiert werden soll.

Fig. 10 zeigt analog zu Fig. 5 ein Beispiel, bei dem die Indifferenzkurve nicht linear verläuft.

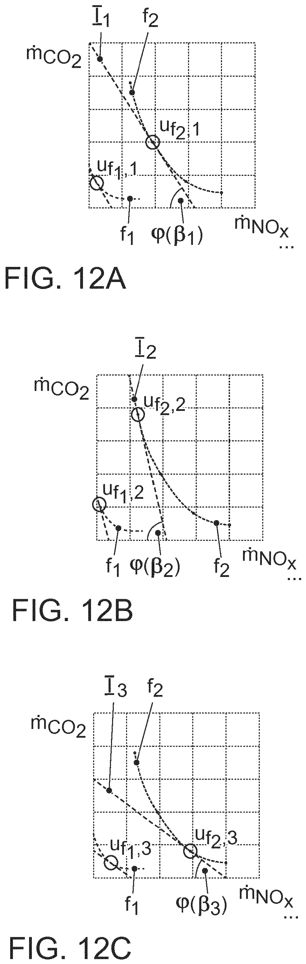

Die Figuren 11 bis 12C zeigen beispielhaft anhand der kombinierten Emissionsbetrachtung des $CO_2$-Ausstoßes und des NOx-Ausstoßes die Bestimmung der Indifferenzkurven I (Fig. 12A-C), die an unterschiedliche Paretofronten f angelegt werden, um optimierte Betriebspunkte hinsichtlich der $CO_2$-Emissionen $\dot{m}_{CO2}$ und der NOx-Emissionen $\dot{m}_{NOx}$ zu ermitteln und daraus in bekannter Weise die entsprechende(n) Führungsgröße(n) abzuleiten.

Die Grundlage bildet die in Figur 12 dargestellte Größe $\beta$, die abhängig von einer Differenz $\delta$ bestimmt wird und mit der Steigung der Indifferenzkurven I korrespondiert. $\varphi(\beta)$ bezeichnet hier den Winkel, mit der die Indifferenzkurve I die $\dot{m}_{NOx}$-Achse (Abszisse) schneidet.

$\delta$ ergibt sich gemäß Figur 11 aus der Differenz eines zeit- (bzw. strecken-)abhängigen Grenzwertverlaufs $EM^G$ über die Zeit t (gestrichelte Funktion). Der eigentliche Grenzwert $EM^G$ wird dabei bspw. in mg/km also einer Masseneinheit pro Strecke angegeben und wächst also mit zunehmender Zeit bzw. zurückgelegter Strecke s. Daneben wird der Verlauf der kumulierten Emissionswerte $EM^K$ (z.B. eine NOx Menge $m_{NOx}$ aufgezeichnet (durchgezogene Linie) und aus beiden wird die Differenz $\delta$ gebildet (gepunktete Linie). Es gilt die Beziehung gemäß Formel 2:

$$(2)\ \delta(t) = \max(0, EM^G_{NOx} \cdot (s(t) + \tilde{s}(t)) - (m_{NOx}(t) + \tilde{m}_{NOx}(t)))$$

Demnach ergibt sich das zeit- bzw. streckenabhängige $\delta$ aus der Emissionsobergrenze $EM^G$, für NOx die mit einem Streckenwert s multipliziert wird, der sich aus einer bisherigen, also bereits abgefahrenen Strecke s(t) und einer prognostizierten Strecke $\tilde{s}(t)$ ergibt. In den Verlauf der Emissionsobergrenze fließt also sowohl eine auf Ist-Größen beruhende Information (bisherige Strecke) und eine auf prognostizierten Informationen beruhender Streckenverlauf ein.

Von diesem strecken- bzw. zeitabhängigen Grenzwert wird dann die tatsächliche, kumulierte Emission $EM^K$ (hier $m_{NOx}(t)$) und eine zukünftige, prognostizierte Emission $EM^P$ (hier $\dot{m}_{NOx}(t)$) abgezogen. Die Prädiktion ist bis zu einem Prädiktionshorizont t = T möglich.

Zu einem Zeitpunkt t = $t_1$ zeigen die Kurven in einer rückschauenden Betrachtung (Pfeil V nach links) die bisherigen Verläufe der Komponenten $EM^G$ s(t) und $m_{NOx}(t)$, wobei eine vorausschauende Betrachtung (Pfeil Z nach rechts) zusätzlich die Prädiktionskomponenten $EM^G$ $\tilde{s}(t)$ und $\tilde{m}_{NOx}(t)$ berücksichtigt.

Zum Zeitpunkt t = $t_1$ gilt dann:

$$\delta(t_1) = \max(0, EM^G_{NOx} \cdot (s(t_1) + \tilde{s}(t_1)) - (m_{NOx}(t_1) + \tilde{m}_{NOx}(t_1)))$$

mit der abgefahrenen Strecke:

$$s(t_1) = \int_0^{t_1} v(\tau)d\tau$$

der prognostizierten Strecke:

$$\tilde{s}(t_1) = \int_{t_1}^{T} \tilde{v}(\tau)d\tau$$

dem kumulierten (bisher realisierten) Emissionswert $EM^K$, hier:

$$m_{NOx}(t_1) = \int_0^{t_1} \dot{m}_{NOx}(\tau)d\tau$$

und dem prognostizierten Emissionswert $EM^P$, hier:

$$\widetilde{m}_{NOx}(t_1) = \int_{t_1}^T \widetilde{\dot{m}}_{NOx}(\tau)d\tau$$

wobei $\overline{\widetilde{v}}$ die Prädiktion eines zukünftigen Geschwindigkeitsverlaufs ist und $\widetilde{\dot{m}}_{NOx}$ der damit korrespondierende prognostizierte Verlauf eines NOx-Massenstroms.

Aus einem sich so ergebenden δ-Wert (z.B. δ1, δ2 oder δ3) wird dann mittels einer Kennlinie, die in Figur 12 dargestellt ist, ein β-Wert abgeleitet, der zur Steigung einer Indifferenzkurve I korrespondiert, die zur Ermittlung eines Pareto-optimierten Betriebspunktes und damit zur gewünschten Führungsgröße führt. Paretofronten $f_1$, $f_2$ für unterschiedliche Betriebszustände ($u_{f1}$, und $u_{f2}$) sind in den Fig. 12A bis 12C dargestellt. Für die Kennlinie, die zur Ermittlung des β-Wertes führt, soll gelten, dass

$$\lim_{\delta \to 0+} \beta(\delta) = \infty$$

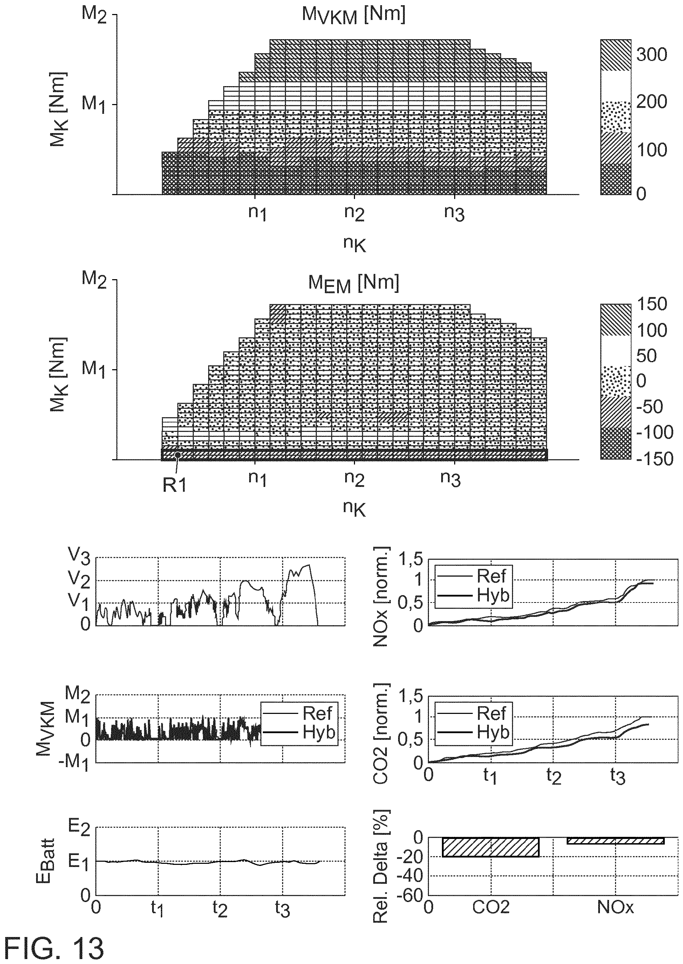

Gleichzeitig soll hier auch gelten, dass die Funktion streng monoton fallend ist, so dass bei zunehmenden δ, β stetig abnimmt, wie dies in der Funktion in Fig. 13 beispielhaft dargestellt ist.

Gleichzeitig stellt β auch den ersten Äquivalenzfaktor dar, der in die Kostenfunktion gemäß Formel 1 einfließt und dort im vorliegenden Fall die Ist-Emissionsgröße $\dot{m}_{NOx}$ in ein angemessenes $CO_2$-Äquivalent umrechnet.

In den Figuren 12A, 12B und 12C sind jeweils zwei Kurven (die Paretofronten $f_1$ und $f_2$) eingezeichnet, die jeweils Pareto-optimierte Emissionskombinationen für $CO_2$ und NOx in unterschiedlichen Betriebszuständen zeigen. $f_1$ kennzeichnet hier die Emmisionskombinationen eines Betriebszustands mit niedrigerer Leistung und insgesamt auch eher niedrigeren Emissionswerten ($\dot{m}_{CO2}$ und $\dot{m}_{NOx}$) und $f_2$ kennzeichnet die Emissionskombinationen eines Betriebszustands mit höherer Leistung und damit auch mit eher höheren Emissionswerten ($\dot{m}_{CO2}$ und $\dot{m}_{NOx}$). $f_1$ und $f_2$ bilden Emissionsparetofronten für unterschiedliche Betriebszustände.

Die gewünschte Führungsgröße x(t) für eine bestimmte Emissionskombination $u_{f1}$ oder $u_{f2}$, wird durch Anlegen der Indifferenzkurve I ermittelt, deren Steigung mit dem β-Wert korrespondiert, der sich aus der Kennlinie in Figur 12 ergibt. Dieser so bestimmten Zielgrößenkombination $u_{f1}$ oder $u_{f2}$ (Emmisionskombination) wird dann beispielsweise mit Hilfe einer bekannten Informationen eine AGR als geeignete Pareto-optimierte Führungsgröße x(t) zugeordnet (analog zum Diagramm aus Fig. 4). In Figur 4 ist der Zusammenhang zwischen NOx- und Rußemission in Verbindung mit der AGR-Rate angegeben. Aus anderen Diagrammen oder auch aus mehrdimensionalen Kennfeldern (mit Paretoflächen) sind die Zusammenhänge zwischen Führungsgröße x(t) und Emissionskombinationen aus zwei oder mehr Emissionsgrößen entnehmbar.

Figur 12A zeigt dabei ein $\beta_1$, Figur 12B ein $\beta_2$ und Figur 12C ein $\beta_3$. Die unterschiedlichen β-Werte ($\beta_1$, $\beta_2$ und $\beta_3$) ergeben sich aus den korrespondierenden δ-Werten mit Hilfe der Kennlinie in der Figur 12.

Verringert sich das δ zwischen dem Emissionsgrenzwert und der kumulierten Emission von δ1 zu δ2, so muss sich die Steigung der Indifferenzkurve erhöhen (die Indifferenzkurve I wird steiler), da Betriebspunkte bevorzugt werden sollen, bei denen wegen des geringeren Abstandes zum Emissionsgrenzwert für NOx-Emissionen solche Betriebspunkte bevorzugt werden, bei denen die NOx-Emission reduziert ist. Entsprechend ist in diesen Betriebspunkten der $CO_2$-Ausstoß erhöht (Figur 12B).

Umgekehrt sinkt bei einem zunehmenden δ das β und damit auch die Steigung der Indifferenzkurve, deren Verlauf flacher wird, und es werden in der gewünschten Weise Betriebspunkte bevorzugt bei denen höhere NOx-Werte in Kauf genommen werden können und auf der anderen Seite die $CO_2$-Emission entsprechend reduziert wird (Figur 12C).

Mit dem dargestellten Ansatz lassen sich im Betrieb und in Abhängigkeit von sich ändernden Randbedingungen die Emissionswerte (Zielfunktionen) verbessern. Neben den hier dargestellten Problemen, bei denen Emissionsgrößen paarweise berücksichtigt wurden, kann das Verfahren auch auf mehrdimensionale Probleme ausgedehnt werden. So ist es zum Beispiel möglich, Pareto-optimierte Führungsgrößen x(t) für Mehrfach-Kombinationen (z.B. für $CO_2$-Ausstoß, Rußemission und NOx-Emission) zu bestimmen. Es können auch in Ergänzung zur Führungsgröße AGR noch andere Führungsgrößen x(t) Pareto-optimiert zur Regelung bestimmt werden (z.B. AGR-Aufteilung, Füllung, Zündzeitpunkt oder Raildruck).

Die Fig. 13 bis 16 zeigen in unterschiedlichen Diagrammen mögliche Auswirkungen der oben dargestellten Steuerungs- und Regelungsansätzen zur Verteilung des Drehmoments zwischen dem Verbrennungsmotor 2 und dem Elektromotor 23.

In den beiden oberen Diagrammen sind jeweils Kennfelder aufgetragen, welche die Drehmomentverteilung zwischen dem Verbrennungsmotor 2 ($M_{VKM}$) und dem Elektromotor 23 ($M_{EM}$, unteres Diagramm) zeigen. Dabei zeigen die unterschiedlichen Schraffuren grob entsprechend den daneben angeordneten Legenden die unterschiedlichen Drehmomentbeiträge der beiden Antriebsaggregate 2, 23. Das Gesamtdrehmoment $M_K$ ist über die Drehzahl n aufgetragen.

Diese Kennfelder verändern sich mit den berücksichtigten Äquivalenzfaktoren (Pareto-optimiert ermittelt), die sich aus den Optimierungsansätzen ergeben. Das heißt, sie können sich kontinuierlich mit der Betriebshistorie verändern und ggf. auch mit der (ggf. ständig anzupassenden) Betriebsprognose, in der die Prädiktionsinformation(en) berücksichtigt werden. Anpassungen der Grenzwerte können sich ebenfalls auswirken.

Es können aber auch mehrere diskrete Kennfelder verwendet werden, in denen die gewünschte Drehmoment-/Leistungsverteilung für typische Äquivalenzfaktorkombinationen verwendet werden, die aus typischen Fahrverläufen beruhen.

In dem Block darunter ist oben links ein Geschwindigkeits-/Fahrprofil dargestellt, in dem unterschiedliche Geschwindigkeiten über die Zeit aufgetragen sind. Das Diagramm darunter zeigt die entsprechenden abgerufenen Drehmomente des Verbrennungsmotors 2 und zwar für einen Referenzbetrieb, in dem nur der Verbrennungsmotor 2 arbeitet (dünne Linien) und für einen Hybridbetrieb (dicke Linien) in dem der Verbrennungsmotor 2 und der Elektromotor 23 arbeiten.

Darunter ist ein Diagramm aufgezeichnet, welches den Ladezustandsverlauf der Traktionsbatterie über die Zeit ausgehend von einem Ladezustand $E_1$ darstellt. Rechts oben im unteren Block ist der normierte, kumulierte NOx-Ausstoß aufgetragen und zwar für den Referenzbetrieb (reiner Verbrennungsmotorbetrieb) und den Hybridbetrieb. Darunter ist der entsprechende $CO_2$-Ausstoß in entsprechender Weise dargestellt, wobei der Hybridbetrieb mit einer starken Linie dargestellt ist und der Referenzbetrieb mit einer dünnen Linie.

Darunter ist die relative Einsparung von $CO_2$ bzw. NOx dargestellt, die mit Anwendung der erfindungsgemäß verwendeten Kostenfunktion erzielt werden kann.

Fig. 13 zeigt eine Momentenaufteilung, bei dem der Ladezustand $E_{Batt}$ zu Beginn und am Ende des Fahrzyklus möglichst konstant gehalten werden kann. Dies ist für den fortwährenden Einsatz von Hybridfahrzeugen wichtig, da so für den Betrieb genügend Ladereserve zum Aufladen (Generatorbetrieb der Elektromotors 23, Rekuperation beim Bremsen) vorhanden ist und genügend Entladereserve zum Entladen bei elektrisch unterstütztem oder rein elektrischem Betrieb. Gleichzeitig ist hier die Drehmomentverteilung so gewählt, dass möglichst der $CO_2$-Ausstoß optimiert wird. Bei so einem Szenario spielt die Berücksichtigung des NOx-Ausstoßes über den ersten Äquivalenzfaktor $\beta(\delta)$ nur eine untergeordnete Rolle. Der Schwerpunkt der Steuerung liegt darauf, dass der Ladezustand möglichst konstant gehalten werden soll.

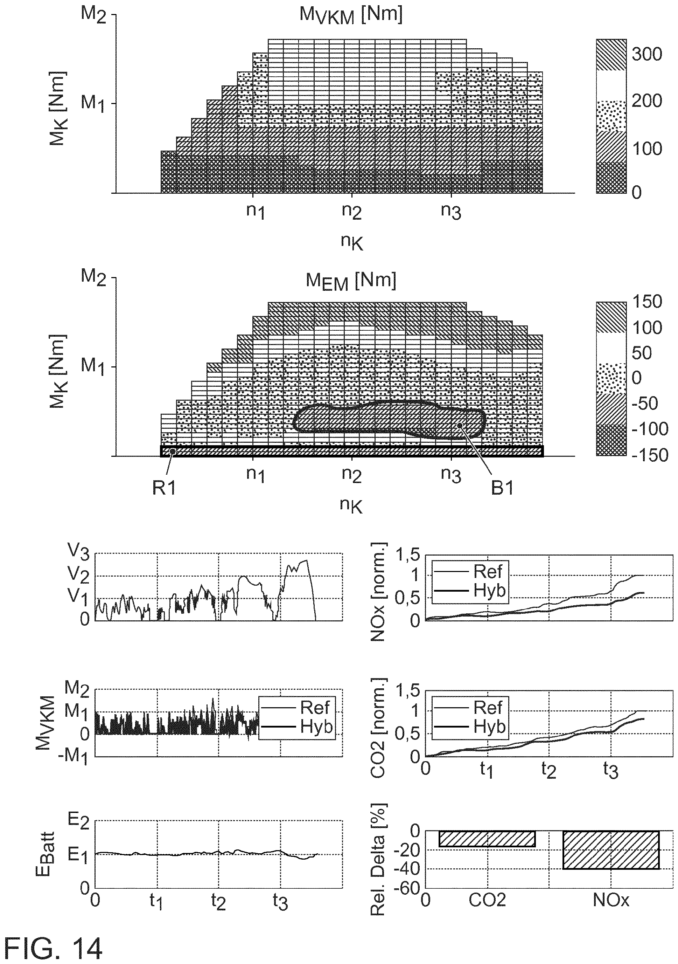

Daraus ergibt sich für die Drehmomentbeiträge des Verbrennungsmotors 2 das obere Kennfeld, das zeigt, dass in hohen Drehmomentbereichen überwiegend verbrennungsmotorisch gefahren wird. Die weißen Bereiche im $M_{EM}$-Diagramm darunter zeigen, dass dort der verbrennungsmotorische Betrieb durch Drehmomentbeiträge der Elektromaschine unterstützt wird. In den ganz niedrigen Drehmomentbereichen zeigt ein schraffierter Streifen einen für Hybridantriebe typischen Rekuperationsbereich R1 (siehe auch Fig. 14 bis 16), in dem die dort im Generatorbetrieb arbeitende Elektromaschine 23 die Traktionsbatterie 21 lädt (z.B. im Schubbetrieb). Im Vergleich zu einem ungeregelten/ungesteuerten System stellen sich dabei ein um ca. 20 % reduzierter $CO_2$-Ausstoß und ein um ca. 10 % reduzierter NOx-Ausstoß ein. So ein Ergebnis kann beispielsweise auch mit einem fest eingestellten Äquivalenzfaktor $\beta$ erzielt werden.

Fig. 14 zeigt ein ähnliches Szenario, bei dem ebenfalls der Ladezustand der Traktionsbatterie 21 möglichst neutral gehalten werden soll, bei dem jedoch sowohl der $CO_2$-Ausstoß als auch der NOx-Ausstoß in ausgewogener Weise optimiert werden soll. Hier zeigt das erfindungsgemäße Steuerungsverfahren eine deutliche Wirkung.

Auch verändern sich die Momentenkennfelder im Gegensatz zu dem in Fig. 13 gezeigten Szenario deutlich. Während im Szenario nach Fig. 13 im hohen Drehmomentbereich das Drehmoment $M_K$ nahezu ausschließlich über den Verbrennungsmotor 2 zur Verfügung gestellt wird, wird hier die Aufteilung dahingehend geändert, dass im hohen Drehmomentbereich der Beitrag des Verbrennungsmotors 2 deutlich durch einen Drehmomentbeitrag der Elektromaschine 23 unterstützt wird, während im mittleren Drehmomentbereich das Drehmoment wieder ausschließlich über den Verbrennungsmotor 2 bereitgestellt wird.

Zusätzlich ergibt sich im unteren Drehmomentbereich und in einem mittleren Drehzahlbereich etwa zwischen $N_1$ und $N_3$ ein Bereich B1, in dem ein Teil des Drehmomentbeitrages $M_{VKM}$ des Verbrennungsmotors 2 genutzt wird, um die Elektromaschine 23 im Generatorbetrieb zu betreiben und so den Ladezustand der Traktionsbatterie etwa bei $E_1$ zu halten. Bei diesem Szenario ergibt sich eine deutliche NOx-Emissionsreduzierung um ca. 40 % während die $CO_2$-Reduzierung (etwa 16%) darunter nur unwesentlich leidet. Das erfindungsgemäße Verfahren erlaubt also ein deutlich verbessertes Emissionsverhalten bei identischen Fahrleistungen, indem die Drehmomentverteilung über die Emissionsoptimierung des Verbrennungsmotors 2 geregelt wird.

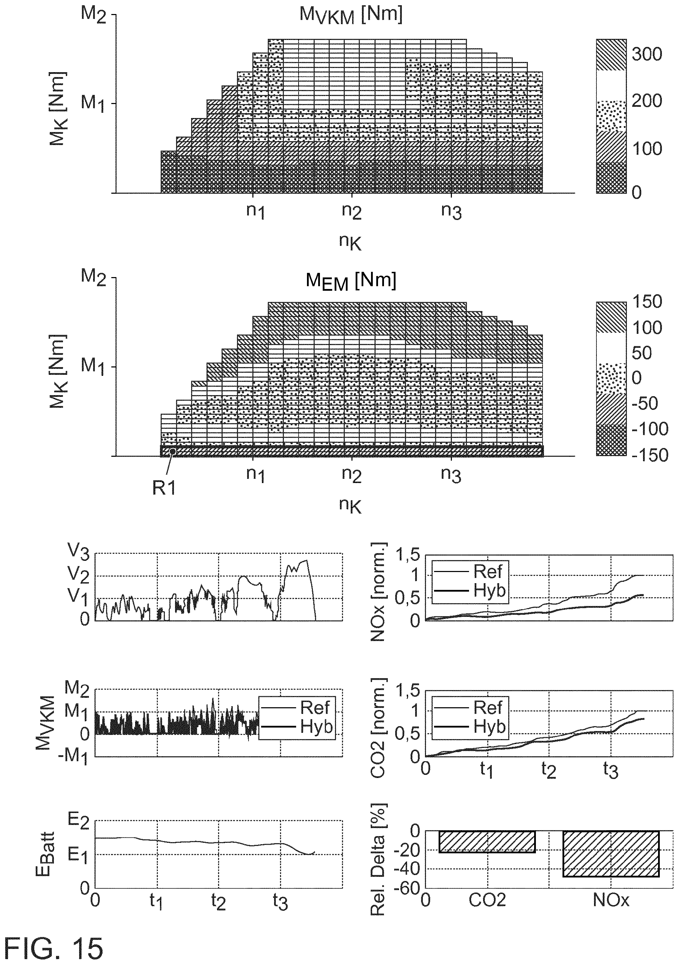

Fig. 15 zeigt ein Szenario bei dem von einem höheren (SOC > $E_1$) Ladezustand der Traktionsbatterie ausgegangen wird (SOC hoch). Dies bedeutet, dass mehr elektrische Energie für den Antrieb zur Verfügung gestellt werden kann. Diese Auswirkung würde sich im zweiten Äquivalenzfaktor $\alpha_{EL}$, der einen tatsächlichen und einen gewünschten Ladezustand berücksichtigt niederschlagen.

Für die Drehmomentkennfelder bedeutet dies, dass sich die Drehmomentbeiträge des Verbrennungsmotors 2 nur geringfügig ändern. Im unteren Drehmomentbereich werden jedoch im höheren Drehzahlbereich die Beiträge des Verbrennungsmotors 2 reduziert. Dagegen fällt der Bereich B1 für die Drehmomentbeiträge $M_{EM}$, der in Fig. 14 dargestellt ist, hier weg, und der Drehmomentbeitrag $M_{EM}$ der Elektromaschine 23 wird dort etwas erhöht. Gleichzeitig wird auch der Drehmomentbeitrag der Elektromaschine 23 im höheren Drehmomentbereich über den gesamten Drehzahlbereich etwas breiter. Im Ergebnis zeigt sich hier eine zusätzliche Reduzierung des $CO_2$-Ausstoßes und eine deutliche weitere Reduzierung des NOx-Ausstoßes, der hier knapp 50 % beträgt und eine weitere Verminderung des $CO_2$-Ausstoßes (etwas über 20 %).

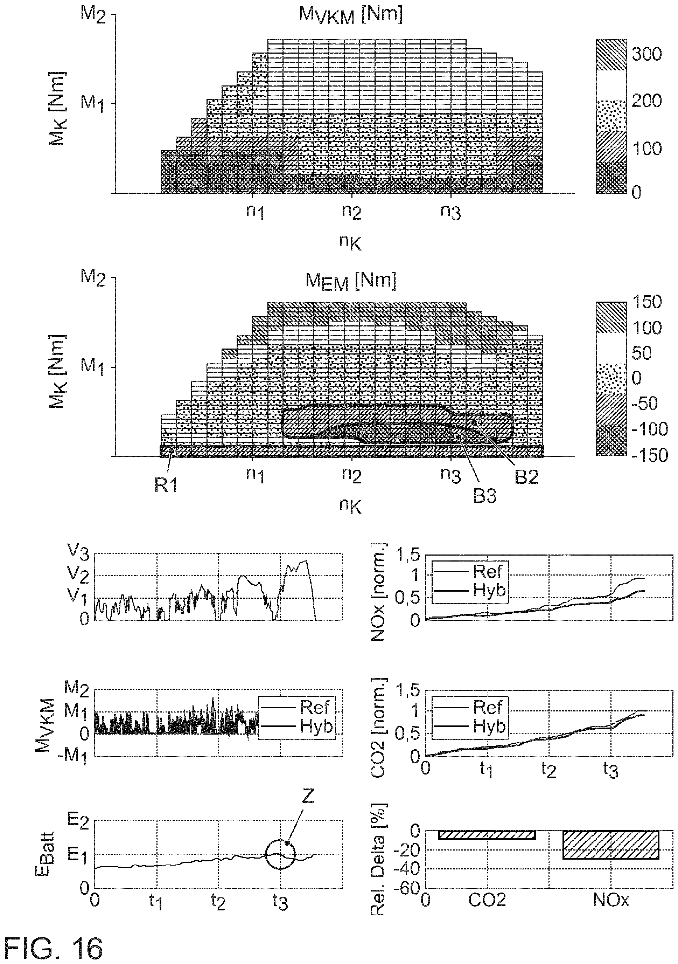

Schließlich zeigt Fig. 16 ein Szenario mit einem niedrigeren Ausgangsladezustand (SOC < $E_1$) der Traktionsbatterie. In so einem Fall wird angestrebt, den Ladezustand (SOC) während des Betriebes zu erhöhen. Dies bedeutet, dass Betriebsbereiche realisiert werden müssen, in denen der Drehmomentbeitrag des Verbrennungsmotors 2 steigen muss. Gleichzeitig soll bei diesem Szenario angestrebt werden, dass sowohl der $CO_2$-Ausstoß als auch der NOx-Ausstoß in ausgeglichener Weise berücksichtigt werden soll.

Dadurch ergibt sich die Drehmomentaufteilung gemäß den oberen beiden Diagrammen zwischen $M_{VKM}$ und $M_{EM}$. Das Drehmomentfeld für die Verbrennungskraftmaschine 2 ist vergleichbar mit dem in Fig. 15. Allerdings ist in einer Zone im unteren Drehmomentbereich und im mittleren Bereich der Drehzahlen der Drehmomentbeitrag der Verbrennungskraftmaschine deutlich erhöht. Gleichzeitig ergibt sich ein zu B1 in Fig. 14 korrespondierender Bereich B2, in dem der generatorische Betrieb der Elektromaschine 23 verstärkt ist und ein weiterer Bereich B3, in dem der generatorische Betrieb noch weiter verstärkt wird. Dadurch wird der Ladezustand der Batterie erhöht (siehe Diagramm unten links). Nur in sehr hohen Drehmomentbereichen Z (z.B. bei starken Beschleunigungen) wird ein Teil der generatorisch gewonnenen Energie zur Emissionsreduzierung eingesetzt. Allerdings zeigen sich auch die Auswirkungen auf die Reduktion der Emissionen, die gegenüber den Szenarien in Fig. 14 und 15 wegen des verstärkten Einsatzes des Verbrennungsmotors 2 deutlich geringer ausfallen. Bei ausgewogener Optimierung ergeben sich dennoch für $CO_2$ etwa 10% und für NOx: ca. 30% Emissionsreduktion.

**Bezugszeichenliste**

1    Steuergerät
2    Hubkolbenmotor
2a    Getriebe
3    Ventile
4    Ladeluftstrang
5    Abgasstrang
6    Luftfilter
7    Abgasturbolader
8    Zwischenkühler
9    Zylinder
10    NOx-Speicherkatalysator
11    Dieselpartikelfilter
12    Abgasklappe
13    Auspuff
14    Nockenwelle
15    Nockenwellen-Verstelleinrichtung
16    AGR-Hochdruckventil
17    Abgaskühlung
18    AGR-Niederdruckventil
19    Stelleinrichtung
20    Hauptdrossel
21    el. Energiespeicher
22    Umrichter
23    el. Antrieb
24    Kupplung
25    Antriebsstrang

200 Fahrzeug

$M_K$ Antriebsmoment (gesamt)

$M_{VKM}$ Antriebsmoment (Verbrennungsmotor)

$M_{EM}$ Antriebsmoment (Elektromotor)

$\bar{n}_K$ eingestellte Drehzahl

$\beta$ erster Äquivalenzfaktor

$\alpha$ zweiter Äquivalenzfaktor

$P_{EL}$ el. Leistung

SOC Ladezustand

x(t) Führungsgröße

NOx-G Grenzwert

$NOx\text{-}K_1$ kumulierter Ist-Wert

FW Fahrerwunsch

SB Sonstige Betriebsbedingungen

$EM^G$ Emissionsgrenzwert

$EM^K$ kumulierte Emissionswerte

$EM^{DS}$ Emissionsdurchsätze

I Indifferenzkurve

PI Prädiktionsinformation

$EM^P$ Emissionsprognose

$\delta$ (t) Differenzfunktion

$\beta$ Steigung

s(t) Betriebszustand-Prognoseinformation

s zurückgelegte Strecke

t Betriebszeit

f Paretofront

$\varphi(\beta)$ Winkel

$\tilde{s}(t)$ prognostizierte Strecke

$\tilde{v}$ Prädiktion eines zukünftigen Geschwindigkeitsverlaufs

$\tilde{\dot{m}}_{NOx}$ prognostizierter Verlauf eines NOx-Massenstroms

$u_f$ Betriebszustand

B1-B3 generatorischer Betriebsbereich

R1 Rekuperationsbereich

Z Beschleunigungsbereich

**Patentansprüche**

1. Steuerungsverfahren für einen Hybridantrieb in einem Fahrzeug (200) mit einem Verbrennungsmotor (2) und einem Elektromotor (23), zum Bestimmen einer Drehmomentaufteilung zwischen dem Verbrennungsmotor (2) und dem Elektromotor (23), wobei in einer Kostenfunktion (J)

- eine Betriebszustandsinformation (FW, SB),
- eine Ladezustandsinformation (SOC, SOCref) einer Traktionsbatterie (21), und
- eine Differenz ($\delta$) zwischen einer Emissionsobergrenze ($EM^G$) und einer kumulierten Ist-Emissionsgröße ($EM^K$), berücksichtigt werden und

ein Betriebszustand des Verbrennungsmotors (2) und damit das verbrennungsmotorische Antriebsmoment ($M_{VKM}$) mittels einer Führungsgröße (x(t)) so beeinflusst wird, dass wenigstens zwei Ist-Emissionsgrößen ($EM_1$, $EM_2$) so eingestellt werden, dass die entsprechenden kumulierten Ist-Emissionsgrößen ($EM^K$) in einem Betriebszeitraum mit einer Zusammenstellung aus beliebigen, in zufälliger Reihenfolge eingestellten, unterschiedlichen Betriebszuständen des Hybridantriebs und damit des Verbrennungsmotors (2) Emissionsobergrenzen ($EM^G$) für diesen Betriebszeitraum nicht überschreiten, wobei die Kostenfunktion (J) minimiert wird, indem die Führungsgröße (x(t)) mittels einer aus einer Differenzfunktion ($\delta$(t)) bestimmten Indifferenzkurve (I) aus Pareto-optimalen Alternativen ausgewählt wird und so der verbrennungsmotorische Drehmomentanteil ($M_{VKM}$) emissionsoptimiert einstellbar ist.

**2.** Steuerungsverfahren nach Anspruch 1, wobei die Differenzfunktion ($\delta$(t)) zur Bestimmung eines ersten Äquivalenzfaktors ($\beta(\delta)$) dient, welcher eine zweite Ist-Emissionsgröße ($EM_2$) in ein Emissionsäquivalent einer ersten Ist-Emissionsgröße ($EM_1$) umrechnet.

**3.** Steuerungsverfahren nach Anspruch 1 oder 2, wobei die Ladezustandsinformation (SOC, SOCref) zur Bestimmung eines zweiten Äquivalenzfaktors ($\alpha_{el}$) dient, welcher eine Antriebsleistung ($P_{EL}$) des Elektromotors in ein Emissionsäquivalent einer ersten Ist-Emissionsgröße ($EM_1$) umrechnet.

**4.** Steuerungsverfahren nach Anspruch 2 oder Anspruch 3 in Verbindung mit Anspruch 2, wobei die Indifferenzkurve (I) eine Gerade ist, deren Steigung mit dem ersten Äquivalenzfaktor ($\beta(\delta)$) korreliert, der mittels der Differenzfunktion ($\delta$ (t)) bestimmbar ist.

**5.** Steuerungsverfahren nach Anspruch 1, 2, 3 oder 4, wobei in der Differenzfunktion ($\delta$(t)) eine Prädiktionsinformation (PI) berücksichtigt wird.

**6.** Steuerungsverfahren nach Anspruch 5, wobei die Prädiktionsinformation (PI) eine Betriebszustand-Prognoseinformation (s(t)) und/oder eine Emissions-Prognose-Größe ($EM^P$) umfasst.

**7.** Steuerungsverfahren nach Anspruch 6, wobei die Betriebszustands- Prognoseinformation (s(t)) wenigstens eine Information aus der folgenden Gruppe umfasst:

F ahrstreckenqualität, Fahrstreckenlänge, Umweltbedingungen.

**8.** Steuerungsverfahren nach einem der vorhergehenden Ansprüche, wobei die Betriebszustandsinformation (FW, SB) eine Drehzahl (n(t)) und ein Soll-Gesamtdrehmoment (MSoll(t)) umfasst.

**9.** Steuerungsverfahren nach einem der vorhergehenden Ansprüche, wobei die Ist-Emissionsgrößen ($EM_1$; $EM_2$) wenigstens zwei der folgenden Größen umfassen:
Kraftstoffverbrauch, $CO_2$-Ausstoß, NOx-Ausstoß, HC-Ausstoß, CO-Ausstoß, kombinierter HC- und NOx-Ausstoß, Rußpartikelanzahl, Rußpartikelmasse, AdBlue-Verbrauch.

**10.** Steuerungsverfahren nach einem der vorhergehenden Ansprüche, wobei die Führungsgröße (x(t)) wenigstens eine der folgenden Größen umfasst: AGR-Rate, AGR-Aufteilung, Füllung, Ladedruck, Zündzeitpunkt, Raildruck.

**11.** Steuerungsverfahren nach einem der vorhergehenden Ansprüche, wobei wenigstens zwei Ist-Emissionsgrößen ($EM_1$; $EM_2$), nämlich $CO_2$ Ausstoß und NOx-Ausstoß und/oder NOx-Ausstoß und Rußausstoß, betrachtet werden.

**12.** Steuerungsverfahren nach einem der vorhergehenden Ansprüche, wobei wenigstens drei Ist-Emissionsgrößen ($EM_1$; $EM_2$) aus der folgenden Gruppe betrachtet werden: $CO_2$ Ausstoß, NOx-Ausstoß und Rußausstoß.

**13.** Steuergerät (1) zur Durchführung des Verfahrens nach einem der Ansprüche 1 bis 12.

**14.** Hybridantrieb mit einem Verbrennungsmotor (2), einem Elektromotor (23) und mit einem Steuergerät (1) nach Anspruch 13.

**15.** Fahrzeug mit einem Hybridantrieb nach Anspruch 14.

**Claims**

**1.** Control method for a hybrid drive in a vehicle (200) comprising an internal combustion engine (2) and an electric motor (23) for determining a torque distribution between the internal combustion engine (2) and the electric motor (23), wherein

   - operating state information (FW, SB),
   - state-of-charge information (SOC, SOCref) of a traction battery (21), and
   - a difference ($\delta$) between an emission upper limit ($EM^G$) and a cumulated actual emission variable ($EM^K$) are taken into account in a cost function (J) and

an operating state of the internal combustion engine (2), and thus the internal-combustion-engine drive torque ($M_{VKM}$), is influenced by means of a reference variable (x(t)) such that at least two actual emission variables ($EM_1$, $EM_2$) are set in such a way that the corresponding cumulated actual emission variables ($EM^K$) in an operating period with a combination of arbitrary different operating states of the hybrid drive, and thus of the internal combustion engine (2), set in a random order do not exceed emission upper limits ($EM^G$) for this operating period, wherein the cost function (J) is minimized in that the reference variable (x(t)) is selected from Pareto-optimal alternatives by means of an indifference curve (I) determined from a differential function ($\delta(t)$), and therefore the internal-combustion-engine torque component ($M_{VKM}$) can be set so as to be optimized with respect to emissions.

2. Control method according to Claim 1, wherein the differential function ($\delta(t)$) serves for determining a first equivalence factor ($\beta(\delta)$), which converts a second actual emission variable ($EM_2$) into an emission equivalent of a first actual emission variable ($EM_1$).

3. Control method according to Claim 1 or 2, wherein the state-of-charge information (SOC, SOCref) serves for determining a second equivalence factor ($\alpha_{el}$), which converts drive power ($P_{EL}$) of the electric motor into an emission equivalent of a first actual emission variable ($EM_1$).

4. Control method according to Claim 2 or Claim 3 in combination with Claim 2, wherein the indifference curve (I) is a straight line of which the slope correlates with a first equivalence factor ($\beta(\delta)$), which can be determined by means of the differential function ($\delta(1)$).

5. Control method according to Claim 1, 2, 3 or 4, wherein prediction information (PI) is taken into account in the differential function ($\delta(1)$).

6. Control method according to Claim 5, wherein the prediction information (PI) comprises operating-state forecast information (s(t)) and/or an emission forecast variable ($EM^P$).

7. Control method according to Claim 6, wherein the operating-state forecast information (s(t)) comprises at least one item of information from the following group:
quality of roadway, length of roadway, environmental conditions.

8. Control method according to one of the preceding claims, wherein the operating-state information (FW, SB) comprises a rotational speed (n(t)) and a setpoint total torque (MSoll(t)).

9. Control method according to one of the preceding claims, wherein the actual emission variables ($EM_1$; $EM_2$) comprise at least two of the following variables: fuel consumption, $CO_2$ emission, NOx emission, HC emission, CO emission, combined HC and NOx emission, soot particle count, soot particle mass, AdBlue consumption.

10. Control method according to one of the preceding claims, wherein the reference variable (x(t)) comprises at least one of the following variables: exhaust recirculation rate, exhaust recirculation rate distribution, filling, charging pressure, ignition time, rail pressure.

11. Control method according to one of the preceding claims, wherein at least two actual emission variables ($EM_1$; $EM_2$), specifically $CO_2$ emission and NOx emission and/or NOx emission and soot emission, are considered.

12. Control method according to one of the preceding claims, wherein at least three actual emission variables ($EM_1$; $EM_2$) from the following group are considered: $CO_2$ emission, NOx emission and soot emission.

13. Controller (1) for carrying out the method according to one of Claims 1 to 12.

14. Hybrid drive comprising an internal combustion engine (2), an electric motor (23) and a controller (1) according to Claim 13.

15. Vehicle comprising a hydraulic drive according to Claim 14.

**Revendications**

1. Procédé de commande d'un entraînement hybride dans un véhicule (200) comprenant un moteur à combustion interne (2) et un moteur électrique (23), ledit procédé étant destiné à déterminer une répartition de couple entre le moteur à combustion interne (2) et le moteur électrique (23),
   dans une fonction de coût (J),

   - une information d'état de fonctionnement (FW, SB),
   - une information d'état de charge (SOC, SOCref) d'une batterie de traction (21), et
   - une différence (δ) entre une limite d'émission supérieure (EM$^G$) et une grandeur d'émission réelle cumulée (EM$^K$), étant prises en compte et

   une grandeur de référence (x(t)) influant sur un état de fonctionnement du moteur à combustion interne (2) et donc sur le couple d'entraînement (M$_{VKM}$) du moteur à combustion interne de façon à régler au moins deux grandeurs d'émission réelles (EM$_1$, EM$_2$) de sorte que, dans une période de fonctionnement avec une combinaison d'états de fonctionnement différents quelconques, réglés dans un ordre aléatoire, de l'entraînement hybride et donc du moteur à combustion interne (2), les grandeurs d'émission réelles cumulées correspondantes (EM$^K$) ne dépassent pas des limites d'émission supérieures (EM$^G$) pour cette période de fonctionnement, la fonction de coût (J) étant minimisée par sélection de la grandeur de référence (x(t)) parmi des variantes optimales de Pareto à l'aide d'une courbe d'indifférence (I) déterminée à partir d'une fonction de différence (δ(t)) et ainsi par réglage à émissions optimisées de la composante de couple du moteur à combustion (M$_{VKM}$) .

2. Procédé de commande selon la revendication 1, la fonction de différence (δ(t)) étant utilisée pour déterminer un premier facteur d'équivalence (β(δ)) qui convertit une deuxième grandeur d'émission réelle (EM$_2$) en un équivalent d'émission d'une première grandeur d'émission réelle (EM$_1$).

3. Procédé de commande selon la revendication 1 ou 2, l'information d'état de charge (SOC, SOCref) servant à déterminer un deuxième facteur d'équivalence (α$_{el}$) qui convertit une puissance d'entraînement (P$_{EL}$) du moteur électrique en un équivalent d'émission d'une première grandeur d'émission réelle (EM$_1$).

4. Procédé de commande selon la revendication 2 ou la revendication 3 en liaison avec la revendication 2, la courbe d'indifférence (I) étant une droite dont la pente est corrélée au premier facteur d'équivalence (β(δ)) qui peut être déterminé à l'aide de la fonction de différence (5(t)).

5. Procédé de commande selon la revendication 1, 2, 3 ou 4, l'information de prédiction (PI) étant prise en compte dans la fonction de différence (5(t)).

6. Procédé de commande selon la revendication 5, l'information de prédiction (PI) comprenant une information de pronostic d'état de fonctionnement (s(t)) et/ou une grandeur de pronostic d'émission (EM$^P$).

7. Procédé de commande selon la revendication 6, l'information de pronostic d'état de fonctionnement (s(t)) comprenant au moins une information du groupe suivant : qualité de l'itinéraire, longueur de l'itinéraire, conditions environnementales.

8. Procédé de commande selon l'une des revendications précédentes, l'information d'état de fonctionnement (FW, SB) comprenant une vitesse de rotation (n(t)) et un couple total cible (MSoll(t)).

9. Procédé de commande selon l'une des revendications précédentes, les grandeurs d'émission réelles (EM$_1$, EM$_2$) comprenant au moins deux des grandeurs suivantes : consommation de carburant, émissions de CO$_2$, émissions de NOx, émissions de HC, émissions de CO, émissions combinées de HC et de NOx, nombre de particules de suie, masse de particules de suie, consommation AdBlue.

10. Procédé de commande selon l'une des revendications précédentes, la grandeur de référence (x(t)) comprenant l'une au moins des grandeurs suivantes : taux EGR, distribution EGR, charge, pression de suralimentation, instant d'allumage, pression de rampe.

11. Procédé de commande selon l'une des revendications précédentes, au moins deux grandeurs d'émissions réelles (EM$_1$, EM$_2$), à savoir les émissions de CO$_2$ et les émissions de NOx et/ou les émissions de NOx et les émissions de suie, étant prises en compte.

12. Procédé de commande selon l'une des revendications précédentes, au moins trois grandeurs d'émission réelles ($EM_1$; $EM_2$) du groupe suivant étant prises en compte : les émissions de $CO_2$, les émissions de NOx et les émissions de suie.

13. Unité de commande (1) destinée à la mise en œuvre du procédé selon l'une des revendications 1 à 12.

14. Entraînement hybride comprenant un moteur à combustion interne (2), un moteur électrique (23) et une unité de commande (1) selon la revendication 13.

15. Véhicule à entraînement hybride selon la revendication 14.

FIG. 1

FIG. 2

FIG. 3

FIG. 4

FIG. 5

FIG. 6

FIG. 7

FIG. 8

FIG. 9

FIG. 10

FIG. 11

FIG. 12

$\underline{I}_1$  $f_2$

$\dot{m}CO_2$

$u_{f_2,1}$

$u_{f_1,1}$

$f_1$  $\varphi(\beta_1)$

$\dot{m}NO_x$
...

FIG. 12A

$\underline{I}_2$

$\dot{m}CO_2$

$u_{f_2,2}$

$u_{f_1,2}$

$f_1$  $\varphi(\beta_2)$  $f_2$

$\dot{m}NO_x$
...

FIG. 12B

$\underline{I}_3$  $f_2$

$\dot{m}CO_2$

$u_{f_2,3}$

$u_{f_1,3}$

$f_1$  $\varphi(\beta_3)$

$\dot{m}NO_x$
...

FIG. 12C

FIG. 13

FIG. 14

FIG. 15

FIG. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2857271 A2
- GB 2520637 A
- GB 2483371 A
- EP 2096565 A1

**In der Beschreibung aufgeführte Nicht-Patentliteratur**

- **LIN et al.** A stochastic control strategy for hybrid electric vehicles. *Boston,* 2004
- **AUS OLIVIER GRONDIN et al.** Energy management strategy for Diesel hybrid electric vehicle. *IEEE Vehicle Power and Propulsion Conference,* 2011